# EUROPEAN PATENT APPLICATION

(11) **EP 4 613 441 A1**
(43) Date of publication of application: **10.09.2025**
(21) Application number: 24162417.0
(22) Date of filing: 08.03.2024
(51) Int. Cl.: B25J 9/10, B25J 9/12, B25J 17/02, B25J 19/00

(54) **ROBOT JOINT ASSEMBLY AND A METHOD OF ASSEMBLY**

(71) Applicant: Kassow Robots ApS, 2770 Kastrup (DK)
(72) Inventor: KASSOW, Kristian, 2300 Copenhagen S (DK)
(74) Representative: COPA Copenhagen Patents

(57) **Abstract**

A robot joint assembly and a robot comprising a robotic arm with a joint assembly are disclosed. Also, a method for assembling a robot joint assembly is disclosed. The robot joint assembly comprises a housing, an output part, a motor, and a tube element extending along a joint axis between a primary tube end and a secondary tube end and being coaxially aligned with a rotor and a stator of the motor. The joint assembly comprises a hollow passage along the joint axis and through the motor from a primary joint assembly end to a secondary joint assembly end, and wherein the tube element forms part of the hollow passage. The joint assembly comprises a tube-fastening element fastening the tube element to the housing or the output part. The tube-fastening element comprises a substantially cylindrical passage extending along the joint axis and forming a tube receiver enclosing and securing at least a secondary tube end part of the tube element.

## Description

The present disclosure relates to a robot, e.g. a robotic arm, and/or a robot joint assembly for such robot or robotic arm. More particularly, the present disclosure relates to an improved robot joint assembly for performing movement of the robot or robotic arm as well as a method for assembling a robot joint assembly.

### BACKGROUND

Robots and in particular robotic arms are widely used to perform a wide variety of automated tasks. Recently lightweight robots have increased in popularity for assisting human activities, e.g. in production facilities. These robots are commonly known as collaborative robots or cobots.

For robots, such as robotic arms, it is desirous to enhance flexibility and facilitate more compact robot solutions. It is a further objective to make robots and/or robotic arms lighter as well as easier and cheaper to manufacture. Furthermore, reliability and robustness of such lightweight robots is of continuous importance.

### SUMMARY

It is an object of the present disclosure at least to provide improvements of the prior art and/or to solve or reduce problems known from the prior art. It is a further object of the present disclosure to provide an advantageous or at least alternative robot, robotic arm, and/or components thereof.

More particularly, the present disclosure provides a solution which allows for easier production, use of lighter and less costly materials, as well as increases reliability and decreases the risk of failures. Furthermore, the present disclosure also provides for simplification of the robot, robotic arm, and/or components thereof.

Accordingly, the present disclosure comprises a robot comprising a robotic arm extending between a base end and a tool end and comprising a base at the base end and a plurality of joints including a first joint and a second joint. The present disclosure also relates to a robot joint assembly, e.g. to form one of the plurality of joints of the disclosed robot, such as the first joint and/or the second joint. Furthermore, the present disclosure also relates to a method for assembling a robot joint assembly, such as the also disclosed robot joint assembly.

The present invention is further defined by the appended set of claims.

### GENERAL DESCRIPTION

A robot is disclosed. The robot comprises a robotic arm extending between a base end and a tool end. The robotic arm comprises a base at the base end. The robotic arm may be configured for coupling with a tool at the tool end. For example, the robotic arm may comprise a tool flange, e.g. for connecting the tool, at the tool end.

The robotic arm comprises a plurality of joints connecting the base and the tool end. The plurality of joints may include a first joint and a second joint, and optionally one or more of a third joint, a fourth joint, a fifth joint, a sixth joint and a seventh joint.

The first joint is positioned between the base and the second joint. The second joint may be positioned between the first joint and the tool end and/or between the first joint and the third joint. The third joint may be positioned between the second joint and the tool end and/or between the second joint and the fourth joint. The fourth joint may be positioned between the third joint and the tool end and/or between the third joint and the fifth joint. The fifth joint may be positioned between the fourth joint and the tool end and/or between the fourth joint and the sixth joint. The sixth joint may be positioned between the fifth joint and the tool end and/or between the fifth joint and the seventh joint. The seventh joint may be positioned between the sixth joint and the tool end, such as between the sixth joint and the tool flange at the tool end.

The robotic arm comprises a plurality of motors to cause movement of the robotic arm with respect to a plurality of axes. The plurality of motors includes a first motor and a second motor, and optionally one or more of a third motor, a fourth motor, a fifth motor, a sixth motor and a seventh motor. Any or all of the plurality of motors may be a permanent magnet AC motor. Any or all of the plurality of motors may comprise or be integrated with a gear assembly, e.g. an integral gear, such as a strain wave gear. Hence, any or all of the plurality of motors may be or form part of a gear motor.

The first motor causes movement of the first joint with respect to a first axis. The second motor causes movement of the second joint with respect to a second axis. The third motor may cause movement of the third joint with respect to a third axis. The fourth motor may cause movement of the fourth joint with respect to a fourth axis. The fifth motor may cause movement of the fifth joint with respect to a fifth axis. The sixth motor may cause movement of the sixth joint with respect to a sixth axis. The seventh motor may cause movement of the seventh joint with respect to a seventh axis.

The robotic arm may comprise a plurality of motor controllers, i.e. processing units adapted to control the plurality of motors. For example, the plurality of motor controllers may include a first motor controller, a second motor controller, a third motor controller, a fourth motor controller, a fifth motor controller, a sixth motor controller and/or a seventh motor controller. The first motor controller may be adapted to control the first motor. The second motor controller may be adapted to control the second motor. The third motor controller may be adapted to control the third motor. The fourth motor controller may be adapted to control the fourth motor. The fifth motor controller may be adapted to control the fifth motor. The sixth motor controller may be adapted to control the sixth motor. The seventh motor controller may be adapted to control the seventh motor.

The present disclosure also relates to a robot joint assembly, e.g. to form one of the plurality of joints of the disclosed robot, such as the first joint and/or the second joint. Accordingly, the robot may comprise a plurality of such robot joint assemblies, e.g. including a first joint assembly and a second joint assembly, and optionally one or more of a third joint assembly, a fourth joint assembly, a fifth joint assembly, a sixth joint assembly, and a seventh joint assembly. For example, the first joint assembly may form the first joint. The second joint assembly may form the second joint. The third joint assembly may form the third joint. The fourth joint assembly may form the fourth joint. The fifth joint assembly may form the fifth joint. The sixth joint assembly may form the sixth joint. The seventh joint assembly may form the seventh joint.

The first joint assembly may comprise the first motor and optionally the first motor controller. The second joint assembly may comprise the second motor and optionally the second motor controller. The third joint assembly may comprise the third motor and optionally the third motor controller. The fourth joint assembly may comprise the fourth motor and optionally the fourth motor controller. The fifth joint assembly may comprise the fifth motor and optionally the fifth motor controller. The sixth joint assembly may comprise the sixth motor and optionally the sixth motor controller. The seventh joint assembly may comprise the seventh motor and optionally the seventh motor controller.

The robot may comprise a control unit. The control unit may be arranged at the base end of the robotic arm. For example, the control unit may form part of the base of the robotic arm. The control unit may be arranged between the robotic arm and a structure to which the robotic arm is to be fastened. The structure may be a factory floor or another structure from which the robotic arm is meant to work. Thus, the base of the robotic arm may comprise the control unit. The first motor controller may be arranged between the control unit and the first motor.

A joint assembly according to the present disclosure, such as one or more or any of the first joint assembly, the second joint assembly, the third joint assembly, the fourth joint assembly, the fifth joint assembly, the sixth joint assembly, and the seventh joint assembly, extends along a joint axis (which may be the axis of the respective joint, i.e. the first, second, third, fourth, fifth, sixth or seventh axis) between a primary joint assembly end and a secondary joint assembly end. The joint assembly further comprises a housing, an output part, e.g. arranged at the secondary joint assembly end, and a motor, such as the first, second, third, fourth, fifth, sixth or seven motor as described above, comprising a rotor and a stator. The motor is adapted to cause movement (e.g. rotational movement about the joint axis) between the housing and the output part of the joint assembly. The rotor and the stator are coaxially aligned along the joint axis. The rotor may comprise a rotor magnet and/or a rotor shaft. The rotor magnet may be a permanent magnet.

The joint assembly further comprises a tube element extending along the joint axis between a primary tube end and a secondary tube end. The tube element is coaxially aligned with the rotor and the stator, i.e. along the joint axis. The tube element has an outer tube diameter, and an inner tube diameter. The outer tube diameter and/or the inner tube diameter may be the same along the majority of the tube element.

The joint assembly comprises a hollow passage along the joint axis from the primary joint assembly end to the secondary joint assembly end. The hollow passage extends through the motor. The tube element is adapted to form part of the hollow passage. Hence in the joint assembly, the tube element may form part of the hollow passage.

The joint assembly comprises a tube fastening element. The tube fastening element may be adapted to fasten the tube element to the housing or to the output part. Accordingly, the tube fastening element may be fastening the tube element to the housing or the output part. The tube fastening element comprises a substantially cylindrical passage extending along the joint axis and forming a tube receiver. The tube receiver is adapted to receive, enclose and secure at least a secondary tube end part of the tube element. Thus, the tube receiver may be enclosing and securing at least the secondary tube end part of the tube element. The secondary tube end part may be near the secondary tube end of the tube element. The secondary tube end part may include the secondary tube end.

The substantially cylindrical passage forming the tube receiver may have one or more inwardly projecting protrusions. The inwardly projecting protrusions may comprise or be ridges extending along a length of the tube receiver, e.g. along the entire length of the tube receiver, and/or along a majority of the length of the tube receiver. Alternatively, or additionally, the inwardly projecting protrusions may comprise or be more point-like protrusions, e.g. only being applied through a limited length or at certain axial positions of the tube receiver. In a preferred example, the tube receiver may comprise three inwardly projecting protrusions, preferably at the same axial position. The inwardly projecting protrusions, in case there are more than one, may be angularly substantially equally spaced within the tube receiver. For example, the tube receiver may comprise three inwardly projecting protrusions being angularly spaced by approximately 120 degrees. The tube receiver may comprise more than three inwardly projecting protrusions, such as four, five or six inwardly projecting protrusions, which may be angularly substantially equally spaced.

The tube receiver, e.g. by having one or more inwardly projecting protrusions, may at a first axial position (e.g. at the middle of the tube receiver) have at least a primary inner radius and a secondary inner radius, which is different from the primary inner radius. For example, the primary inner radius may be larger than the secondary inner radius. The primary inner radius may be larger (e.g. between 5-15%, such as 10%, larger) than half of the outer tube diameter, and wherein the secondary inner radius is smaller (e.g. between 5-15%, such as 10%, smaller) than half of the outer tube diameter.

The tube receiver may extend from a primary tube receiver opening to a secondary tube receiver opening. The tube receiver may comprise an internal enlargement section, e.g. between the primary tube receiver opening and the secondary tube receiver opening. The tube receiver may have a primary opening internal diameter at the primary tube receiver opening. The tube receiver may have a secondary opening internal diameter at the secondary tube receiver opening. The tube receiver may have an enlarged internal diameter at the internal enlargement section. The enlarged internal diameter may be larger than the secondary opening internal diameter and/or the enlarged internal diameter may be larger than the primary opening internal diameter. Diameters may, in cases where the cross section of the tube receiver is not completely circular, e.g. if comprising one or more protrusions, be measured either as the inscribed or circumscribed circle of the tube receiver at the respective axial position.

A primary tube receiver distance, e.g. along the axial direction, e.g. along the joint axis, may be between the enlargement section and the primary tube receiver opening. A secondary tube receiver distance, e.g. along the axial direction, e.g. along the joint axis, may be between the enlargement section and the secondary tube receiver opening. The primary tube receiver distance may be longer than the secondary tube receiver distance. The primary tube receiver distance may be more than 60% of the total tube receiver length from the primary tube receiver opening to the secondary tube receiver opening. The secondary tube receiver distance may be less than 40% of the total tube receiver length, such as less than 20% of the total tube receiver length. The secondary tube receiver distance may be between 2-10 mm, such as between 3-5 mm.

The tube element may have a tube wall thickness. The tube wall thickness may be less than half of the difference between the enlarged internal diameter and the secondary opening internal diameter of the tube receiver. The tube wall thickness may be between 0.1-1 mm, such as between 0.2-0.5 mm.

The tube element may, preferably, be made of aluminium or brass. However, in other examples, the tube element may be made of other materials, such as other metals or alloys.

The tube-fastening element may be fastened to the output part, e.g. to thereby in effect fasten the tube element to the output part. In other examples, the tube-fastening element may be fastened to the housing, e.g. to thereby in effect fasten the tube element to the housing.

The joint assembly may further comprise a gear, such as a strain wave gearing system. The strain wave gearing system comprises a wave generator, a flexspline and a circular spline. The flexspline may be fastened to one of the output part and the housing and the circular spline may be fastened to the other of the output part and the housing. For example, the flexspline may be fastened to the output part and the circular spline may be fastened to the housing. Alternatively, the flexspline may be fastened to the housing and the circular spline may be fastened to the output part. The wave generator is rotated by the rotor, e.g. by means of the rotor shaft of the rotor. Thereby, the motor may provide for rotational movement of the output part relative to the housing.

In some examples, the tube-fastening element may be fastened to the flexspline, in effect fastening the tube element to the flexspline. In other examples, the tube-fastening element may be fastened to the circular spline, in effect fastening the tube element to the circular spline.

One or more wires may extend through the hollow passage of the joint assembly, e.g. including extending through the tube element. Particularly in the disclosed robot, e.g. when the joint assembly forms part of the disclosed robot, one or more wires may extend through the hollow passage of the joint assembly, e.g. to conduct electrical signals from a proximal part of the robotic arm to a more distal part of the robotic arm.

A method is also disclosed for assembling a robot joint assembly, such as the previously described joint assembly. The method comprises providing the tube element, providing the tube fastening element, inserting the secondary tube end of the tube element into the tube receiver such that the secondary tube end part is enclosed by and secured to the tube receiver.

The method further comprises providing the housing, the output part and the motor, and optionally one or more further elements for the joint assembly, and arranging the tube-fastening element, the tube element, the motor, the housing, and the output part such that the tube element is coaxially aligned with the rotor and the stator along the joint axis, and such that the tube element forms part of the hollow passage of the joint assembly along the joint axis.

The method further comprises fastening the tube-fastening element to the housing or to the output part.

The secondary tube end may be inserted into the tube receiver through the primary tube receiver opening.

Inserting the secondary tube end of the tube element into the tube receiver may further include providing a press tool. The press tool may be extending along a press tool axis and having a collar part and a protruding part extending along the press tool axis from the collar part. The protruding part and optionally the collar part may be rotational symmetrical about the press tool axis. The protruding part may have a first diameter at a first axial position and a second diameter at a second axial position, wherein the first axial position is between the second axial position and the collar part, and wherein the second diameter is smaller than the first diameter. The protruding part of the press tool may have a gradually increasing diameter from the second diameter at the second axial position to the first diameter at the first axial position. The protruding part of the press tool may have a substantially uniform diameter between the first axial position and the collar part. The first diameter of the protruding part of the press tool may be between 95-100% of the secondary opening internal diameter.

Inserting the secondary tube end of the tube element into the tube receiver may further include positioning the press tool at the secondary tube receiver opening, such that the protruding part of the press tool extends into the tube receiver through the secondary tube receiver opening and the collar part rests on a rim of the secondary tube receiver opening, and advancing the tube element into the tube receiver by applying an axial force to the press tool.

The tube element may have an inner tube diameter, e.g. at the secondary tube end, e.g. prior to being inserted into the tube receiver. The first diameter of the protruding part of the press tool may be larger than the inner tube diameter. The second diameter of the protruding part of the press tool may be smaller than the inner tube diameter.

The enlarged internal diameter of the internal enlargement section of the tube receiver may be larger than the first diameter of the protruding part of the press tool.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 is a schematic diagram illustrating an exemplary robot,
Fig. 2 is a schematic diagram illustrating exemplary joints,
Fig. 3 schematically illustrates half of a cross-sectional view of an exemplary robot joint assembly,
Fig. 4 schematically illustrates and end view of an exemplary tube element,
Fig. 5 schematically illustrates an end view of an exemplary tube fastening element,
Fig. 6 schematically illustrates a cross sectional view of an exemplary tube-fastening element,
Fig. 7 is a block diagram of an exemplary method, and
Fig. 8 schematically illustrates, in cross sectional views, some of the steps of an exemplary method.

### DETAILED DESCRIPTION

Various exemplary embodiments and details are described hereinafter with reference to the figures, when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

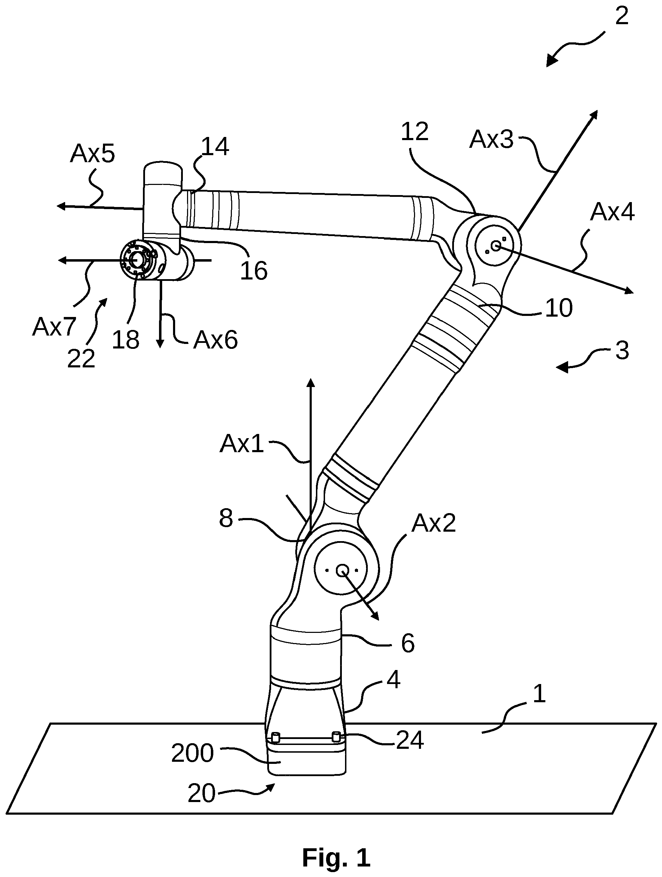

Fig. 1 is a schematic diagram illustrating an exemplary robot 2, which in the present example comprises a robotic arm 3, more particularly, a seven-axis robotic arm.

The robotic arm 3 extends between a base end 20 and a tool end 22 and comprises a base 4 at the base end 20. A tool flange for connection with a tool may preferably be arranged at the tool end 22 of the robotic arm. The robotic arm 3 further comprises a plurality of joints 6, 8, 10, 12, 14, 16, 18. The plurality of joints 6, 8, 10, 12, 14, 16, 18 connects the base 4 and the tool end 22. In the illustrated example, the plurality of joints are seven joints, i.e. including a first joint 6, a second joint 8, a third joint 10, a fourth joint 12, a fifth joint 14, a sixth joint 16 and a seventh joint 18. However, in other examples, the robotic arm may comprise fewer or more joints. For example, in another configuration, the robotic arm 3 may comprise only three joints, such as the first, second and third joints 6, 8, 10.

The first joint 6 is positioned between the base 4 and the second joint 8. The second joint 8 is positioned between the first joint 6 and the third joint 10. The third joint 10 is positioned between the second joint 8 and the fourth joint 12. The fourth joint 12 is positioned between the third joint 10 and the fifth joint 14. The fifth joint 14 is positioned between the fourth joint 12 and the sixth joint 16. The sixth joint 16 is positioned between the fifth joint 14 and the seventh joint 18. The seventh joint 18 is positioned between the sixth joint 16 and the tool end 22.

The plurality of joints 6, 8, 10, 12, 14, 16, 18 cause movement of the robotic arm 3, e.g. movement of the tool end 22 relative to the base end 20. Each joint provides for rotation about a respective axis. The first joint 6 provides for rotation about a first axis Ax1. The second joint 8 provides for rotation about a second axis Ax2. The third joint 10 provides for rotation about a third axis Ax3. The fourth joint 12 provides for rotation about a fourth axis Ax4. The fifth joint 14 provides for rotation about a fifth axis Ax5. The sixth joint 16 provides for rotation about a sixth axis Ax6. The seventh joint 18 provides for rotation about a seventh axis Ax7.

The robotic arm 3 may be put in some configurations, where none of the seven axes Ax1-Ax7 are parallel. However, in other configurations two or more of the seven axes Ax1-Ax7 may be parallel. As illustrated, the second axis Ax2 may be non-parallel with the first axis Ax1. The third axis Ax3 may be non-parallel with the second axis Ax2. The fourth axis Ax4 may be non-parallel with the third axis Ax3. The fifth axis Ax5 may be non-parallel with the fourth axis Ax4. The sixth axis Ax6 may be non-parallel with the fifth axis Ax5. The seventh axis Ax7 may be non-parallel with the sixth axis Ax6.

The robotic arm may comprise a plurality of motors as described in more detail in relation to later figures, e.g. including a motor for each of the plurality of joints 6, 8, 10, 12, 14, 16, 18. Each of the plurality of motors may cause movement of a respective joint of the plurality of joints 6, 8, 10, 12, 14, 16, 18. For example, a first motor may cause movement of the first joint 6 with respect to the first axis Ax1. A second motor may cause movement of the second joint 8 with respect to the second axis Ax2. A third motor may cause movement of the third joint 10 with respect to the third axis Ax3, etc..

The robotic arm 3 is fastened at the base end 20 to a structure 1, which may be a factory floor or another structure from which the robotic arm 3 is meant to work from. In some examples, the structure 1 may be part of a movable unit, such as a mobile robot or a vehicle, which would allow the robot 2 or at least the robotic arm 3 to be moved between different positions. The robotic arm 3 may be fastened to the structure 1 by fastening bolts 24.

The robot 2, as illustrated, further comprises a control unit 200, which in the present example may form an integral part of the base 4 of the robotic arm 3 or may be arranged between the base 4 and the structure 1.

Although being described in relation to a robotic arm 3 being operable relative to seven axes, the present disclosure may alternatively be applied to a robot having only six axes, or even fewer axes. For example, with respect to the example illustrated in Fig. 1, movement around the third axis Ax3 may be omitted to obtain a robot operable relative to six axes.

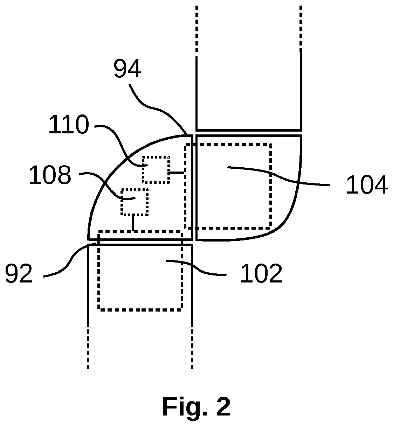

Fig. 2 is a schematic diagram illustrating two exemplary joints 92, 94, e.g. a primary joint 92 and a secondary joint 94. The exemplary joints 92, 94 may be two successive joints of the plurality of joints 6, 8, 10, 12, 14, 16, 18 indicated in Fig. 1. For example, the primary joint 92 may be the first joint 6 of Fig. 1 and the secondary joint 94 may be the second joint 8 of Fig. 1.

Also illustrated is a primary motor 102 provided to rotate the primary joint 92. A secondary motor 104 is provided to rotate the secondary joint 94. Thus, the primary motor 102 may be a first motor for causing movement of the first joint 6 with respect to the first axis Ax1 of Fig. 1. The secondary motor 104 may be a second motor for causing movement of the second joint 8 with respect to the second axis Ax2 of Fig. 1. The primary motor 102 and/or the secondary motor 104 may be a permanent magnet AC motor. Furthermore, the primary motor 102 and/or the secondary motor 104 may comprise or be integrated with a gear assembly, e.g. an integral gear, such as a strain wave gear. Hence, the primary motor 102 and/or the secondary motor 104 may be or may form part of a gear motor.

One or more motor controller units 108, 110 may be provided and adapted to control the motors 102, 104. A primary motor controller unit 108 may be adapted to control the primary motor 102. A secondary motor controller unit 110 may be adapted to control the secondary motor 104.

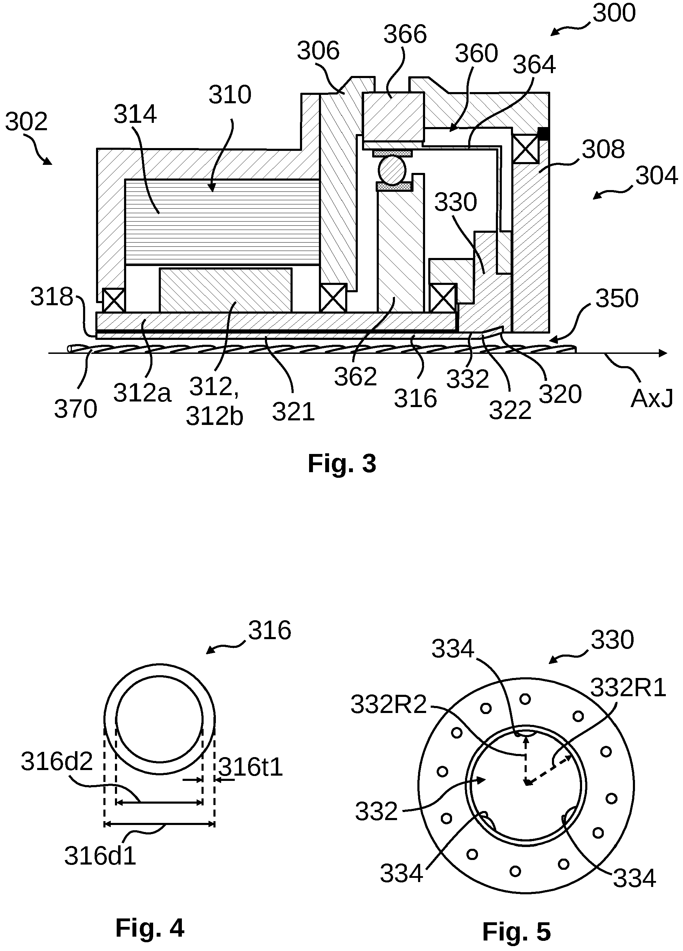

Fig. 3 schematically illustrates half of a cross-sectional view of an exemplary robot joint assembly 300 for forming a joint of a robotic arm, such any of the joints 6, 8, 10, 12, 14, 16, 18 of the robotic arm 3 of Fig. 1, and/or the primary joint 92 or the secondary joint 94 of Fig. 2. The cross-sectional view is seen with a joint axis AxJ of the joint assembly 300 extending left-right in the figures. The joint assembly 300 is generally symmetrical along the joint axis AxJ, and therefore, only half of the cross section is shown.

The joint assembly 300 extends along the joint axis AxJ between a primary joint assembly end 302 and a secondary joint assembly end 304. The joint assembly 300 comprises a housing 306 and an output part 308. In the illustrated example, the output part 308 is arranged at the secondary joint assembly end 304.

The joint assembly 300 comprises a motor 310 with a rotor 312 and a stator 314. As illustrated, the rotor 312 may comprise a rotor shaft 312a and a rotor magnet 312b. The rotor 312 and the stator 314 are coaxially aligned along the joint axis AxJ. The motor is causing movement between the housing 306 and the output part 308. In the illustrated example, the joint assembly 300 comprises a strain wave gearing system 360 for translating the movement of the motor to movement between the housing 306 and the output part 308. However, other gearing systems, as known in the art, might alternatively or additionally be utilized. The strain wave gearing system 360 comprises a wave generator 362, a flexspline 364, and a circular spline 366. The wave generator 362 is rotated by the rotor 312, e.g. the wave generator 362 may be attached to the rotor shaft 312a, as illustrated. In the illustrated example, the flexspline 364 is fastened to the output part 308 and the circular spline 366 is fastened to the housing 306. However, alternatively the flexspline 364 could have been fastened to the housing 306 and the circular spline 366 to the output part 308.

The joint assembly 300 comprises a tube element 316. The tube element 316 is extending along the joint axis AxJ between a primary tube end 318 and a secondary tube end 320. The tube element 316 is coaxially aligned with the rotor 312 and the stator 314. The joint assembly 300 comprises a hollow passage 350 along the joint axis AxJ and through the motor 310 from the primary joint assembly end 302 to the secondary joint assembly end 304. The tube element 316 forms part of the hollow passage 350. The hollow passage 350 allows wires 370 to extend through the joint assembly 300, e.g. for transmitting electrical signals and/or power to more distal joint assemblies or to a tool coupled at the tool end of the robot. Thus, as seen one or more wires 370 may extend through the hollow passage 350 including extending through the tube element 316.

The joint assembly 300 comprises a tube-fastening element 330. The tube-fastening element 330 is fastening the tube element 316 to the output part 308. However, it might alternatively had been fastened to the housing 306. In the illustrated example, the tube-fastening element 330 is fastened to the flexspline 364. However, it might alternatively had been fastened to the circular spline 366. The tube-fastening element 330 comprises a tube receiver 332. The tube receiver 332 is formed by a substantially cylindrical passage extending along the joint axis AxJ. The tube receiver 332 is enclosing and securing at least a secondary tube end part 322 of the tube element 316.

The tube element 316 may comprise a primary tube end part 321, e.g. being a part of the tube element 316 different from the secondary tube end part 322. The primary tube end part 321 may be not enclosed by the tube receiver 332. The primary end part 321 may be between the primary tube end 320 and the secondary tube end part 322.

Fig. 4 schematically illustrates and end view of an exemplary tube element 316, such as the tube element 316 of Fig. 3. In some examples the tube element 316 may be made of aluminium or brass.

However, other convenient materials, such as other metals or alloys as known in the art, may alternatively be used.

The tube element 316 has an outer tube diameter 316d1. The tube element 316 has an inner tube diameter 316d2. The tube element 316 has a wall thickness 316t1, which essentially is half of the difference between the inner tube diameter 316d2 and the outer tube diameter 316d1. An exemplary tube wall thickness 316t1 may be between 0.05-0.5 mm. The outer tube diameter 316d1 and the inner tube diameter 316d2 may be the same along a majority of the tube element 316, such as along more than 50% of the length of the tube element, or more than 80% of the length of the tube element 316. In some examples, as will be explained further below, the tube element 316 may be somewhat deformed near the secondary tube end 320, such as within the secondary tube end part 322, engaging with the tube fastening element 330. Thus, the tube diameters 316d1, 316d2 and the wall thickness 316t1 may be dimensions of a part of the tube element 316 not being deformed, e.g. the primary end part 321.

Fig. 5 schematically illustrates an end view of an exemplary tube fastening element 330, such as the tube-fastening element 330 of Fig. 3. As mentioned also above, the tube-fastening element is adapted to fasten the tube element 316 to the housing 306 or the output part 308. The tube-fastening element 330 forms a tube receiver 332 being a substantially cylindrical passage. The tube receiver 332 is adapted to receive and enclose the secondary tube part 322 of the tube element 316. The tube receiver 332 is further adapted to secure the secondary tube end part 322 when received in the tube receiver 332. Securing the secondary tube end part 322 in the tube receiver 332 may be done by slight deformation of the secondary tube end part 322 when received in the tube receiver 332.

For example, the tube receiver 332 may comprise one or more inwardly projecting protrusions 334. In other words, the substantially cylindrical passage forming the tube receiver 332 may comprise the one or more inwardly projecting protrusions 334. In the present example, the tube receiver comprises three inwardly projecting protrusions 334, which are substantially equally spaced. To help understanding the principle, the size of the illustrated inwardly projecting protrusions 334 have been exaggerated. Thus, at least at a certain axial position, the tube receiver has different radii, e.g. a primary inner radius 332R1 and a secondary inner radius 332R2. The primary inner radius 332R1 is larger than the secondary inner radius 332R2. For example, the primary inner radius 332R1 may be at least 1%, such as at least 2.5%, such as at least 5%, larger than the secondary inner radius 332R2. In some examples, the primary inner radius 332R1 may be between 0.5-1 mm, such as 0.75 mm, larger than the secondary inner radius 332R2. The protrusions 334 may be ridges extending along a length of the tube receiver 332, e.g. along the entire length of the tube receiver 332, and/or along a majority of the length of the tube receiver 332. In other examples, the protrusions 334 may be more point-like protrusions, i.e. only being applied through a limited length or at certain axial positions of the tube receiver 332.

The inwardly projecting protrusions 334 may facilitate securing of the secondary tube end part 322 when received in the tube receiver 332, by restricting the space within the tube receiver 332. Thus, the primary inner radius 332R1 may be larger (e.g. 10% larger) than half of the outer tube diameter 316d1, i.e. providing sufficient space for the tube element in the tube receiver. However, the secondary inner radius 332R2 may be smaller (e.g. 10% smaller) than half of the outer tube diameter 316d1, i.e. effectively requiring certain deformation of the secondary tube end part 322 for it to be received in the tube receiver 332. The primary inner radius 332R1 may be large enough to allow bulging of the tube into the space between the inwardly projecting protrusions 334, as caused by the required compression of the tube at the positions of the inwardly projecting protrusions 334. To facilitate insertion of the secondary tube end part 322 in the tube receiver 332, the inwardly projecting protrusions 334 may be dispensed with near the opening of the tube receiver (e.g. the primary tube receiver opening as will be described later). Thereby, the secondary tube end 320 may be initially received in the tube receiver 332 without necessitating deformation, and the secondary tube end part 322 may be guided into the tube receiver 332, where it may be centred and secured with the tube receiver 332 by the inwardly projecting protrusions 334.

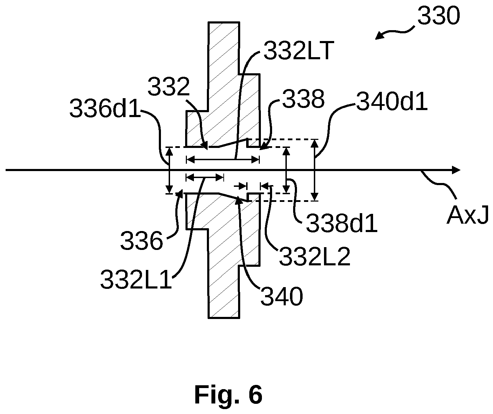

Fig. 6 schematically illustrates a cross sectional view of an exemplary tube-fastening element 330, such as the tube-fastening element 330 of Fig. 3 and/or Fig. 5.

The tube receiver 332 extends from a primary tube receiver opening 336 to a secondary tube receiver opening 338. The tube receiver 332 has a primary opening internal diameter 336d1 at the primary tube receiver opening 336. The tube receiver 332 has a secondary opening internal diameter 338d1 at the secondary tube receiver opening 338. As seen in Fig. 6, the tube receiver may comprise an internal enlargement section 340. The tube receiver 332 has an enlarged internal diameter 340d1 at the internal enlargement section 340. The enlarged internal diameter 340d1 is larger than the secondary opening internal diameter 338d1. The enlarged internal diameter 340d1 may also, as illustrated, be larger than the primary opening internal diameter 336d1. The internal enlarged section 340 may be adapted to receive the wall of the tube element 316 (cf. Fig. 3), such that the inner surface of the tube receiver at the secondary opening 338 becomes flush with the inner surface of the tube element, so as to avoid an edge (e.g. a sharp edge) inside the hollow passage 350, which may potentially damage wires extending therethrough. Accordingly, the tube wall thickness 316t1 (cf. Fig. 4) may be less than half of the difference between the enlarged internal diameter 340d1 and the secondary opening internal diameter 338d1. In other words, the difference between the enlarged internal diameter 340d1 and the secondary opening internal diameter 338d1 may be the same or larger than the difference between the difference between the inner tube diameter 316d2 and the outer tube diameter 316d1 of the tube element (cf. Fig. 4).

The tube receiver 332 has a primary tube receiver distance 332L1 between the enlargement section 340 and the primary tube receiver opening 336. The tube receiver 332 has a secondary tube receiver distance 332L2 between the enlargement section 340 and the secondary tube receiver opening 338. As illustrated, the enlargement section 340 may comprise tapered sections, in such case, the primary tube receiver distance 332L1 and the secondary tube receiver distance 332L2 may designate lengths of the tube receiver having a substantially constant diameter throughout the respective distance. The tube receiver 332 has a total tube receiver length 332LT from the primary tube receiver opening 336 to the secondary tube receiver opening 338. In some examples, the secondary tube receiver distance 332L2 may be less than 40% of the total tube receiver length 332LT. In some examples, the secondary tube receiver distance 332L2 may be less than primary tube receiver distance 332L1.

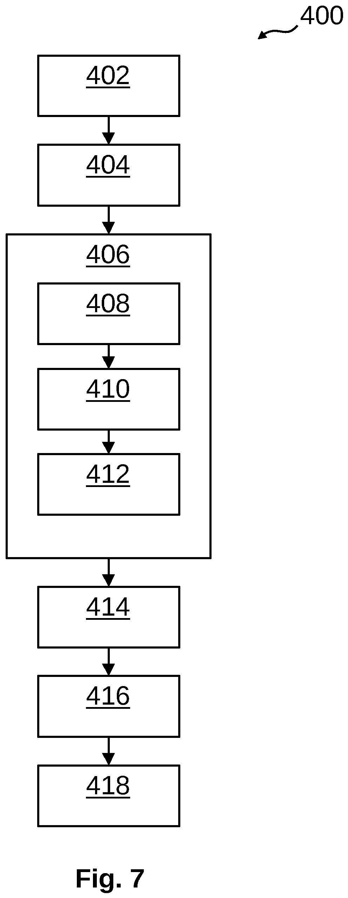

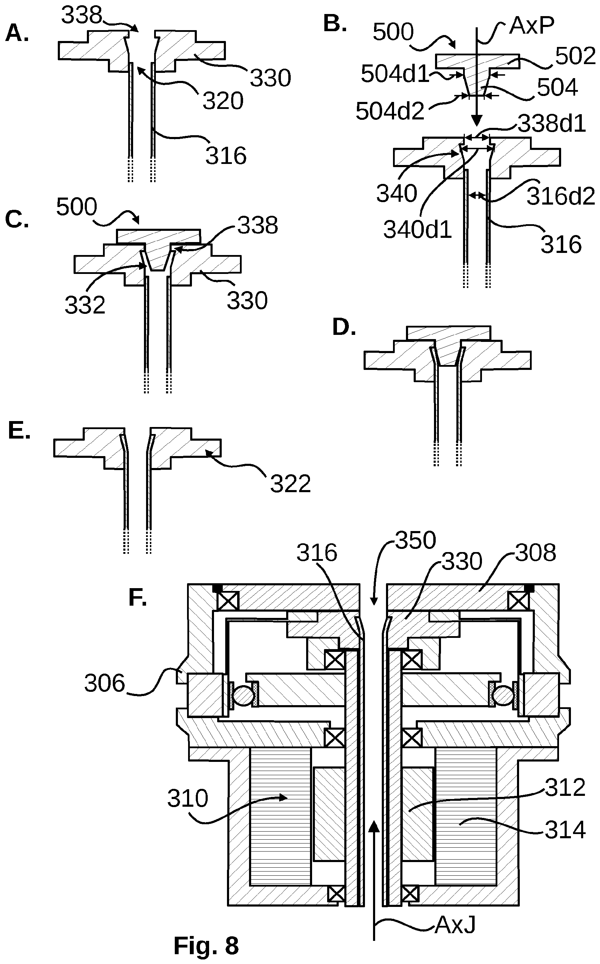

Fig. 7 is a block diagram of an exemplary method 400 for assembling a robot joint assembly 300, such as the robot joint assembly 300 as described in relation to the previous figures. Fig. 8 further schematically illustrates in cross sectional views some of the steps of the method 400. Thus, in the following references to both Figs. 7 and 8 will be used.

The method 400 comprises providing 402 a tube element 316, such as the tube element 316 as described in relation to Figs 3 and 4.

The method 400 comprises providing 404 a tube fastening element 330, such as the tube-fastening element 330 as described in relation to Figs 3, 5 and 6.

The method 400 comprises inserting 406 the secondary tube end 320 of the tube element 316 into the tube receiver 332 such that the secondary tube end part 322 is enclosed by and secured to the tube receiver 332. This part of inserting the secondary tube end 320 of the tube element 316 into the tube receiver 332 is exemplified in steps A.-E. of Fig. 8.

As also illustrated, inserting the secondary tube end 320 of the tube element 316 into the tube receiver 332 may comprise providing 408 an exemplary press tool 500 (cf Fig. 8 B.-D.).

The press tool 500 extends along a press tool axis AxP. The press tool 500 may be substantially rotational symmetrical. The press tool has a collar part 502 and a protruding part 504. The protruding part 504 extends along the press tool axis AxP from the collar part 502. The protruding part 504 has a first diameter 504d1 at a first axial position and a second diameter 504d2 at a second axial position.

As illustrated the first axial position, where the protruding part 504 has the first diameter 504d1, is between the second axial position, where the protruding part 504 has the second diameter 504d2, and the collar part 502. The second diameter 504d2 is smaller than the first diameter 504d1. The protruding part 504 may have a gradually increasing diameter from the second diameter 504d2 at the second axial position to the first diameter 504d1 at the first axial position. The protruding part 504 may have, as illustrated, a substantially uniform diameter (e.g. the first diameter 504d1) between the first axial position, a position where the protruding part 504 has the first diameter 504d1, and the collar part.

The first diameter 504d1 of the protruding part 504 is preferably larger than the inner tube diameter 316d2 of the tube element 316. The second diameter 504d2 of the protruding part 504 is preferably smaller than the inner tube diameter 316d2 of the tube element. Thereby, the press tool 500, as further described below, may be used to expand the tube element 316, more specifically expand the secondary tube end part 322 of the tube element 316 (see Fig. 8 D.).

The enlarged internal diameter 340d1 of the tube receiver 332 at the internal enlargement section 340 is preferably larger than the first diameter 504d1 of the protruding part 504 of the press tool. Thereby, the press tool 500, as further described below, may be used to expand the tube element 316, more specifically expand the secondary tube end part 322 of the tube element 316, such that the wall of the tube element 316 may be expanded into the enlargement section 340 (see Fig. 8 D.).

Inserting 406 the secondary tube end 320 of the tube element 316 into the tube receiver 332 may further comprise positioning 410 the press tool 500 at the secondary tube receiver opening 338 of the tube-fastening element 330. Such that the protruding part 504 of the press tool 500 extends into the tube receiver 332 through the secondary tube receiver opening 338 and the collar part 502 rests on a rim of the secondary tube receiver opening 338 (see Fig. 8 C.). The first diameter 504d1 of the protruding part 504 of the press tool 500 may be slightly less than, but preferably close to, the secondary opening internal diameter 338d1 of the secondary tube receiver opening 338. For example, the first diameter 504d1 may be between 95-100% of the secondary opening internal diameter 338d1.

Inserting the secondary tube end 320 of the tube element 316 into the tube receiver 332 may further comprise advancing 412 the tube element 316 along its longitudinal axis (e.g. a tube axis) into the tube receiver 332 by applying an axial force to the press tool 500, e.g. along the press tool axis, and an opposite axial force to the tube element 316, e.g. along the tube axis, which should be parallel and preferably coaxial with press tool axis AxR (see Fig. 8 D.).

The method 400 comprises providing 414 other elements for the robot joint assembly, such as a housing 306, an output part 308 and a motor 310, as exemplary described in relation to Fig. 3.

The method 400 comprises arranging 416 the tube-fastening element 330 and the tube element 316 with the other elements for the robot joint assembly, such as the motor 310, the housing 306, and the output part 308. Arranging 416 the tube-fastening element 330 and the tube element 316 with the other elements should be performed such that the tube element 316 is coaxially aligned with the rotor 312 and the stator 314 along the joint axis AxJ, and such that the tube element 316 forms part of the hollow passage 350 of the joint assembly 300 along the joint axis AxJ.

The method 400 comprises fastening 418 the tube-fastening element 330 to the housing 306 or the output part 308. In the illustrated example, the tube-fastening element 330 is fastened to the output part 308.

The disclosure has been described with reference to a preferred embodiment. However, the scope of the invention is not limited to the illustrated embodiment, and alterations and modifications can be carried out without deviating from the scope of the invention.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

### LIST OF REFERENCES

- 1: structure
- 2: robot
- 3: robotic arm
- 4: base
- 6: first joint
- 8: second joint
- 10: third joint
- 12: fourth joint
- 14: fifth joint
- 16: sixth joint
- 18: seventh joint
- 20: base end
- 22: tool end
- 24: fastening bolts
- 92: primary joint
- 94: secondary joint
- 102: primary motor
- 104: secondary motor
- 108: primary processing unit
- 110: secondary processing unit
- 200: control unit
- 300: robot joint assembly
- 302: primary joint assembly end
- 304: secondary joint assembly end
- 306: housing
- 308: output part
- 310: motor
- 312: rotor
- 314: stator
- 316: tube element
- 316d1: outer tube diameter
- 316d2: inner tube diameter
- 316t1: tube wall thickness
- 318: primary tube end
- 320: secondary tube end
- 321: primary tube end part
- 322: secondary tube end part
- 330: tube-fastening element
- 332: tube receiver
- 332LT: total tube receiver length
- 332L1: primary tube receiver distance
- 332L2: secondary tube receiver distance
- 332R1: primary inner radius
- 332R2: secondary inner radius
- 334: protrusion
- 336: primary tube receiver opening
- 336d1: primary opening internal diameter
- 338: secondary tube receiver opening
- 338d1: secondary opening internal diameter
- 340: internal enlargement section
- 340d1: enlarged internal diameter
- 350: hollow passage
- 360: strain wave gearing system
- 362: wave generator
- 364: flexspline
- 366: circular spline
- 370: wires
- 400: method
- 402: providing a tube element
- 404: providing a tube fastening element
- 406: inserting the tube element into the tube receiver
- 408: providing a press tool
- 410: positioning the press tool
- 412: advancing the tube element into the tube receiver
- 414: providing other elements
- 416: arranging the tube fastening element and the tube element with other elements
- 418: fastening the tube fastening element
- 500: press tool
- 502: collar part
- 504: protruding part
- 504d1: first diameter of protruding part
- 504d2: second diameter of protruding part
- Ax1: first axis
- Ax2: second axis
- Ax3: third axis
- Ax4: fourth axis
- Ax5: fifth axis
- Ax6: sixth axis
- Ax7: seventh axis
- AxJ: joint axis
- AxP: press tool axis

## Claims

1. A robot joint assembly for forming a joint of a robotic arm extending between a base end and a tool end and comprising a base at the base end and a plurality of joints connecting the base and the tool end, the joint assembly extending along a joint axis between a primary joint assembly end and a secondary joint assembly end and comprising:
- a housing,
- an output part arranged at the secondary joint assembly end,
- a motor comprising a rotor and a stator for causing movement between the housing and the output part, the rotor and the stator being coaxially aligned along the joint axis,
- a tube element extending along the joint axis between a primary tube end and a secondary tube end and being coaxially aligned with the rotor and the stator, the tube element having an outer tube diameter,
wherein the joint assembly comprises a hollow passage along the joint axis and through the motor from the primary joint assembly end to the secondary joint assembly end, and wherein the tube element forms part of the hollow passage,
wherein the joint assembly comprises a tube-fastening element fastening the tube element to the housing or the output part, the tube-fastening element comprises a substantially cylindrical passage extending along the joint axis and forming a tube receiver enclosing and securing at least a secondary tube end part of the tube element.

2. Robot joint assembly according to claim 1, wherein the substantially cylindrical passage forming the tube receiver has one or more inwardly projecting protrusions, whereby the tube receiver at a first axial position has at least a primary inner radius and a secondary inner radius, wherein the primary inner radius is larger than the secondary inner radius, wherein the primary inner radius is larger than half of the outer tube diameter, and wherein the secondary inner radius is smaller than half of the outer tube diameter.

3. Robot joint assembly according to any one of claims 1-2, wherein the tube receiver extends from a primary tube receiver opening to a secondary tube receiver opening, and wherein the tube receiver comprises an internal enlargement section, wherein the tube receiver has a primary opening internal diameter at the primary tube receiver opening, a secondary opening internal diameter at the secondary tube receiver opening, and an enlarged internal diameter at the internal enlargement section, and wherein the enlarged internal diameter is larger than the secondary opening internal diameter.

4. Robot joint assembly according to claim 3, wherein a secondary tube receiver distance between the enlargement section and the secondary tube receiver opening is less than 40% of the total tube receiver length from the primary tube receiver opening to the secondary tube receiver opening.

5. Robot joint assembly according to any one of claims 3-4, wherein the tube element has a tube wall thickness, and wherein the tube wall thickness is less than half of the difference between the enlarged internal diameter and the secondary opening internal diameter.

6. Robot joint assembly according to any one of claims 1-5, wherein the tube element is made of aluminium or brass, and/or wherein the tube wall thickness is between 0.05-0.5 mm.

7. Robot joint assembly according to any one of claims **1-Error! Reference source not found.** further comprising a strain wave gearing system comprising:
- a wave generator,
- a flexspline fastened to one of the output part and the housing, and
- a circular spline fastened to the other of the output part and the housing,
wherein the wave generator is rotated by the rotor, and wherein the tube-fastening element is fastened to the flexspline.

8. A robot comprising a robotic arm extending between a base end and a tool end and comprising a base at the base end and a plurality of joints including a first joint and a second joint, the plurality of joints connecting the base and the tool end, the first joint being positioned between the base and the second joint,
the robotic arm comprises a plurality of motors including a first motor and a second motor, the plurality of motors cause movement of the robotic arm with respect to a plurality of axes, the first motor causes movement of the first joint with respect to a first axis, and the second motor causes movement of the second joint with respect to a second axis,
the robotic arm comprises a first joint assembly extending along the first axis between a first primary joint assembly end and a first secondary joint assembly end and comprising:
- a first housing,
- a first output part arranged at the first secondary joint assembly end,
- the first motor comprising a first rotor and a first stator for causing movement between the first housing and the first output part, the first rotor and the first stator being coaxially aligned along the first axis,
- a first tube element extending along the first axis between a first primary tube end and a first secondary tube end and being coaxially aligned with the first rotor and the first stator, the first tube element having a first outer tube diameter,
wherein the first joint assembly comprises a hollow passage along the first axis and through the first motor from the first primary joint assembly end to the first secondary joint assembly end, and wherein the first tube element forms part of the hollow passage,
wherein the first joint assembly comprises a first tube-fastening element fastening the first tube element to the first housing or the first output part, the first tube-fastening element comprises a substantially cylindrical passage extending along the first axis and forming a first tube receiver enclosing and securing at least a first secondary tube end part of the first tube element.

9. Robot according to claim 8, wherein the robotic arm comprises a second joint assembly extending along the second axis between a second primary joint assembly end and a second secondary joint assembly end and comprising:
- a second housing,
- a second output part arranged at the second secondary joint assembly end,
- the second motor comprising a second rotor and a second stator for causing movement between the second housing and the second output part, the second rotor and the second stator being coaxially aligned along the second axis,
- a second tube element extending along the second axis between a second primary tube end and a second secondary tube end and being coaxially aligned with the second rotor and the second stator, the second tube element having a second outer tube diameter,
wherein the second joint assembly comprises a hollow passage along the second axis and through the second motor from the second primary joint assembly end to the second secondary joint assembly end, and wherein the second tube element forms part of the hollow passage,
wherein the second joint assembly comprises a second tube-fastening element fastening the second tube element to the second housing or the second output part, the second tube-fastening element comprises a substantially cylindrical passage extending along the second axis and forming a second tube receiver enclosing and securing at least a second secondary tube end part of the second tube element.

10. Robot according to any one of claims 8-9, wherein one or more wires are extending through the hollow passage of the first joint assembly including extending through the first tube element.

11. Method for assembling a robot joint assembly comprising:
- providing a tube element extending along a tube axis between a primary tube end and a secondary tube end, the tube element having an outer tube diameter,
- providing a tube-fastening element comprising a substantially cylindrical passage forming a tube receiver adapted to receive at least a secondary tube end part of the tube element,
- inserting the secondary tube end of the tube element into the tube receiver such that the secondary tube end part is enclosed by and secured to the tube receiver,
- providing a housing, an output part and a motor comprising a rotor and a stator being coaxially aligned,
- arranging the tube-fastening element, the tube element, the motor, the housing, and the output part such that the tube element is coaxially aligned with the rotor and the stator along a joint axis and such that the tube element forms part of a hollow passage of the joint assembly along the joint axis through the motor from a primary joint assembly end to a secondary joint assembly end, and
- fastening the tube-fastening element to the housing or the output part.

12. Method according to claim 11, wherein the tube receiver extends from a primary tube receiver opening to a secondary tube receiver opening, wherein the tube receiver has a secondary opening internal diameter at the secondary tube receiver opening, wherein the secondary tube end is inserted into the tube receiver through the primary tube receiver opening, and wherein inserting the secondary tube end of the tube element into the tube receiver includes:
- providing a press tool extending along a press tool axis and having a collar part and a protruding part extending along the press tool axis from the collar part, wherein the protruding part has a first diameter at a first axial position and a second diameter at a second axial position, wherein the first axial position is between the second axial position and the collar part, and wherein the second diameter is smaller than the first diameter,
- positioning the press tool at the secondary tube receiver opening, such that the protruding part of the press tool extends into the tube receiver through the secondary tube receiver opening and the collar part rests on a rim of the secondary tube receiver opening,
- advancing the tube element into the tube receiver by applying an axial force to the press tool.

13. Method according to claim 12, wherein the tube element has an inner tube diameter, and wherein the first diameter of the protruding part of the press tool is larger than the inner tube diameter, and wherein the second diameter of the protruding part of the press tool is smaller than the inner tube diameter.

14. Method according to any one of claims 12-13, wherein the tube receiver comprises an internal enlargement section, wherein the tube receiver has an enlarged internal diameter at the internal enlargement section, and wherein the enlarged internal diameter is larger than the first diameter of the protruding part of the press tool.

15. Method according to any one of claims 12-14, wherein the protruding part of the press tool has a gradually increasing diameter from the second diameter at the second axial position to the first diameter at the first axial position, and/or wherein the protruding part of the press tool has a substantially uniform diameter between the first axial position and the collar part.
